# EUROPEAN PATENT APPLICATION

(11) **EP 3 425 219 A1**
(43) Date of publication of application: **09.01.2019**
(21) Application number: 18180676.1
(22) Date of filing: 29.06.2018
(51) Int. Cl.: F16C 11/06, F16D 3/207

(54) **BALL JOINT UNIT MOVABLE ALONG GUIDE GROOVE**

(30) Priority: 03.07.2017 KR 20170084270
(71) Applicant: Yoon, Dae Won, Seoul 01798 (KR)
(72) Inventor: Yoon, Dae Won, Seoul 01798 (KR)
(74) Representative: Stöckeler, Ferdinand

(57) **Abstract**

Ball joint unit movable along guide grooves, the ball joint unit, unlike ball joints, being able to move in two directions unlike common hinges that can be turned only in one direction because a first member is formed in a ball joint shape and has the first guide groove and a second guide groove on the outer side, so the second member can move with specific directionality by moving along the first guide groove and the second guide groove. A ball joint unit movable along guide grooves according to an embodiment of the present disclosure includes: a first member formed in a spherical shape, having axial lower end fixed to a fixed object, and having a first guide groove and a second guide groove perpendicularly crossing each other along longest circumferences thereof; and a second member extends downward at four sides to receive the first member therein, having four sides movably disposed on the first guide groove and the second guide groove, and supporting a moving object thereon.

## Description

### BACKGROUND OF THE INVENTION

### Field of the Invention

The present disclosure relates to a ball joint unit enabling a side and another side can to rotate at various angles.

### Description of the Related Art

A ball joint is a kind of connecting element composed of a ball assembly having a ball and a ball retainer retaining the ball assembly. That is, the ball assembly combined with the ball retainer can move at various angles and in various directions and the two parts make a kind of joint around the ball, so they can be turned and bent. Such ball joints are used in various industrial facilities and mechanical apparatuses.

However, since the ball joints of the related art are moved at various angles and in various directions without specific directionality, they are difficult to be applied to structures that need to be moved in specific directions. Therefore, there was a limit that common hinged structures that can be turned only in one direction are unavoidably used in this case.

### Documents of Related Art

(Patent Document 1) Korean Patent Application Publication No. 10-2011-0067883 (2011.06.22)
(Patent Document 2) Korean Utility Model No. 20-0145972 (1999.02.24)
(Patent Document 3) Korean Patent No. 10-1539263 (2015.07.20)

### SUMMARY OF THE INVENTION

The present disclosure relates to a ball joint unit movable along guide grooves, the ball joint unit having a ball joint structure and having guide grooves perpendicularly crossing each other on the spherical ball so that an object can be moved only along the guide groove.

According to an embodiment, there is provided a ball joint unit movable along guide grooves, the ball joint unit including: a first member formed in a spherical shape, having axial lower end fixed to a fixed object, and having a first guide groove and a second guide groove perpendicularly crossing each other along longest circumferences thereof; and a second member extends downward at four sides to receive the first member therein, having lower ends movably disposed on the first guide groove and the second guide groove, and supporting a moving object thereon.

According to the ball joint unit movable along guide grooves described above, since the first member is formed in a ball joint shape and has the first guide groove and second guide groove on the outer side, the second member can move with specific directionality by moving along the first guide groove and the second guide groove, so the ball joint unit, unlike ball joints, and can move in two directions unlike common hinges that can be turned only in one direction.

### BRIEF DESCRIPTION OF THE DRAWINGS

The above and other objects, features and other advantages of the present invention will be more clearly understood from the following detailed description when taken in conjunction with the accompanying drawings, in which:
FIG. 1 is a perspective view of a ball joint unit movable along guide grooves according to an embodiment of the present disclosure;
FIGS. 2A and 2B are views showing the operation of the ball joint unit movable along guide grooves according to an embodiment of the present disclosure;
FIG. 3 is a perspective view showing the using state of the ball joint unit that moves along guide grooves according to an embodiment of the present disclosure;
FIG. 4 is a perspective view of a ball joint unit that moves along guide grooves according to another embodiment of the present disclosure; and
FIG. 5 is a view showing the using state of the ball joint unit that moves along guide grooves according to another embodiment of the present disclosure.

### DETAILED DESCRIPTION OF THE INVENTION

The advantages and features of the present disclosure, and methods of achieving them will be clear by referring to the exemplary embodiments that will be describe hereafter in detail with reference to the accompanying drawings. However, the present disclosure is not limited to the exemplary embodiments described hereafter and may be implemented in various ways, and the exemplary embodiments are provided to complete the description of the present disclosure and let those skilled in the art completely know the scope of the present disclosure and the present disclosure is defined by claims. Like reference numerals indicate like components throughout the specification.

In the following description of embodiments, if it is decided that the detailed description of known function or configuration related to the invention makes the subject matter of the invention unclear, the detailed description is omitted. The following terms are defined in consideration of the functions in the embodiments and may depend on the intention and customs of ones who are seated and operators. Therefore, the definitions thereof should be construed based on the contents throughout the specification.

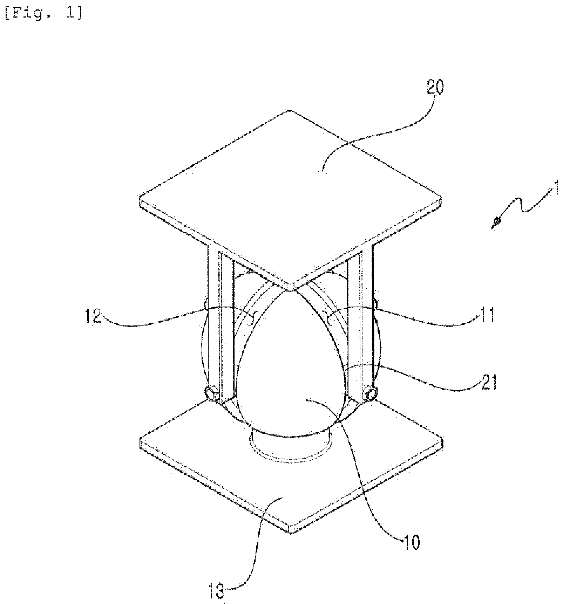

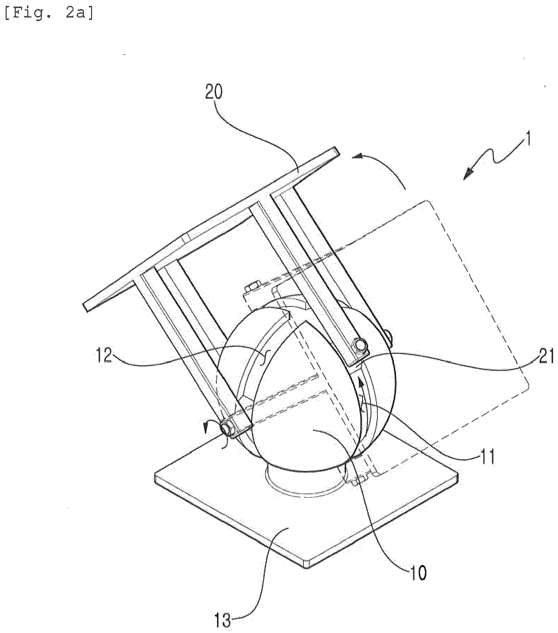

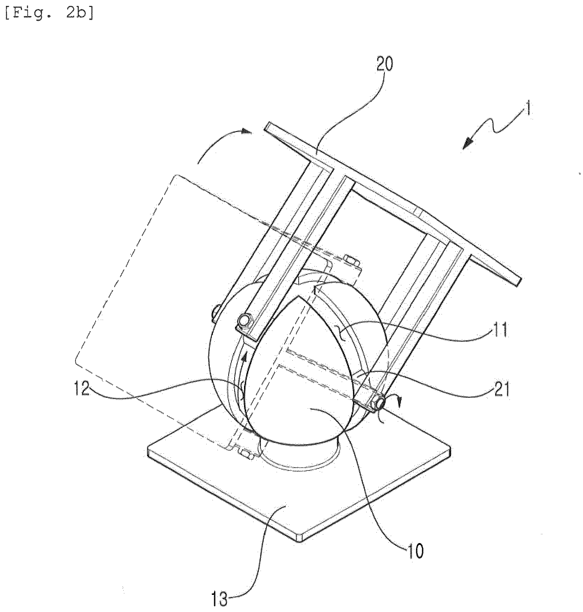

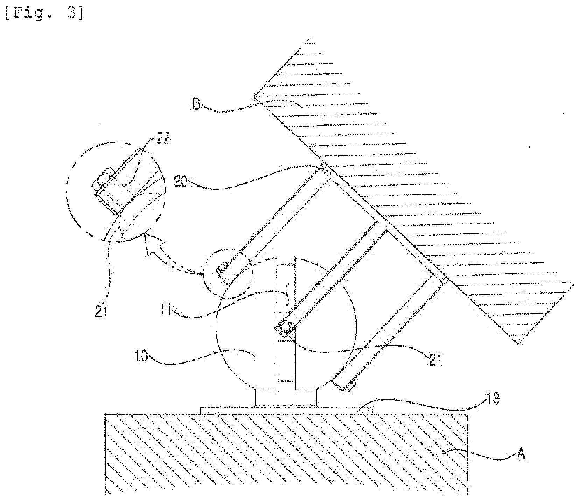

FIGS. 1 to 3 show an embodiment of the present disclosure. FIG. 1 is a perspective view, FIGS. 2A and 2B are operation views, and FIG. 3 is a view showing a using state.

A ball joint unit 1 movable along guide grooves according to an embodiment of the present disclosure is described in detail hereafter with reference to FIGS. 1 to 3.

First, referring to FIG. 1, a first member 10 supports a second member 20 on which a moving object B to be described below is placed. The first member 10 is formed in a spherical shape and the axial lower end is fixed to a fixed object A. A first guide groove 11 and a second guide groove 12 perpendicularly cross each other along the longest circumferences of the first member 10.

The first member 10 may be disposed on the fixed object A or may be fixed to a plate-shaped base 13. The first member 10 may be fixed on the base 13 or the lower end of the first member 10 may be formed in the shape of the base 13.

That is, the first member 10 may be disposed directly on the fixed object A or the base 13 may be fixed on the fixed object A, with the first member 10 thereon. The first member 10 may be formed in spherical shapes with various sizes and the material may be hard metal.

The first groove 11 and the second groove 12 cross each other in the central axial direction of the first member 10. Accordingly, the moving object B is not rotated in the axial direction of the first member 10 on the first member 10, but can be moved with specific directionality along the first guide groove 11 and the second guide groove 12. The first guide groove 11 and the second guide groove 12 are formed in a size such that sliders 21 of the second member 20 to be described below can move in close contact with the grooves. A surfactant etc. may be applied into the first guide groove 11 and the second guide groove 12 so that the sliders 21 can easily move.

Next, referring to FIGS. 2A and 2B, the second member 20 is movably disposed on the first member 10. The moving object B is disposed on the second member 20, so the moving object is moved with specific directionality thereon.

The second member 20 extends downward at four sides to receive the first member therein and the lower ends are movably disposed on the first guide groove 11 and the second guide groove 12. The moving object B is fixed on the second member.

The slider 21 moving in the first guide groove 11 and the second guide groove 12 are dispose at the lower ends of the second member 20. The sliders 21 have recessed shape corresponding to the spherical shape of the first member 10 to be able to move in close contact with the first member 10. Further, the sliders 21 are fixed to ends of rotary shafts 22 disposed through the lower ends of the second member 20 in the width direction to be rotatable with the rotary shafts 22.

Accordingly, as in FIG. 2A, when the second member 20 is turned in the left-right direction, the sliders 21 in the moving direction, that is, in the left-right direction are moved along the first guide groove 11 and the sliders 21 in the non-moving direction, that is, in the front-rear direction are rotated in the second guide groove 12.

On the other hand, as in FIG. 2B, when the second member 20 is turned in the front-rear direction, the sliders 21 in the moving direction, that is, in the front-rear direction are moved along the second guide groove 12 and the sliders 21 in the non-moving direction, that is, in the left-right direction are rotated in the first guide groove 11.

The first member 10 and the second member 20, as shown in FIG. 3, can move various fixed objects A and moving objects B with specific directionality. The fixed object A and the moving object B may be various structures and parts of industrial facilities and mechanical machines in the related art.

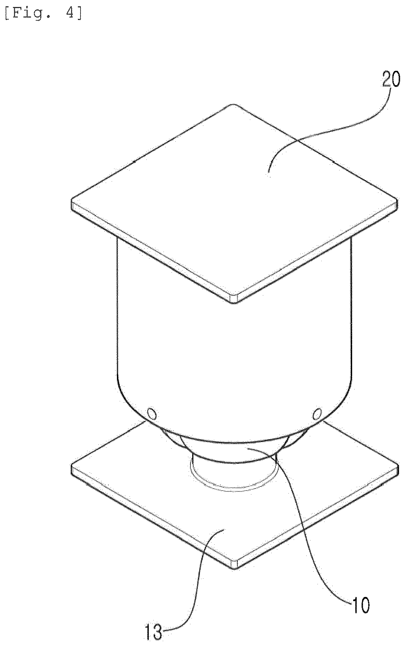

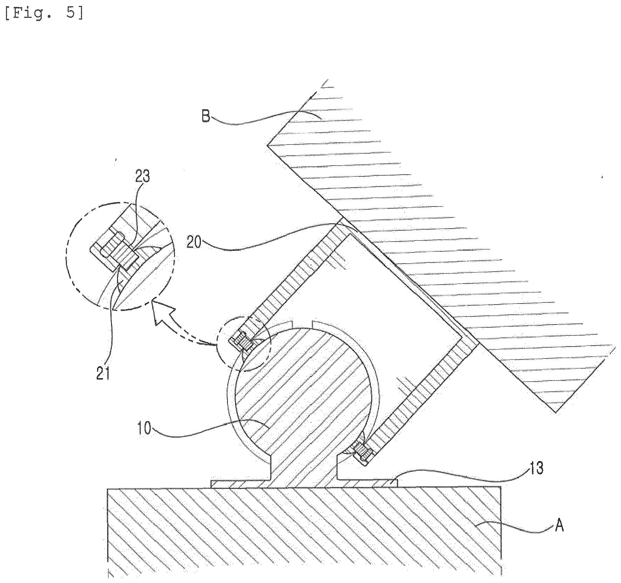

FIG. 4 is a perspective view of a ball joint unit that moves along guide grooves according to another embodiment of the present disclosure and FIG. 5 is a view showing the using state of the ball joint unit that moves along guide grooves according to another embodiment of the present disclosure. The same reference numerals are given to the same components as those of the ball joint unit 1 movable along guide grooves according to an embodiment of the present disclosure.

A ball joint unit 1' movable along guide grooves according to another embodiment of the present disclosure includes: a first member 10 formed in a spherical shape, fixed at the axial lower end to a fixed object, and having a first guide groove 11 and a second guide groove 12 formed along the longest circumferences; and a second member 20 formed in a hollow cylindrical shape with the lower end open to receive the first member 10 therein, having four sides movable in the first guide groove 11 and the second guide groove 12, and supporting a moving object B fixed thereon.

The ball joint unit 1' movable in guide grooves according to another embodiment of the present disclosure is the same in the entire configuration and operation as the ball joint unit 1 movable along guide grooves according to an embodiment of the present disclosure, except that the second member 20 is formed in a hollow cylindrical shape and receives the first member 10 therein and sliders 21 are not fixed on rotary shafts 22, but can rotated on fixed shafts 23. Accordingly, the configuration and operation can be sufficiently inferred and repetitive description is not provided to make the specification simple.

According to the ball joint unit 1 movable along guide grooves described above, since the first member 10 is formed in a ball joint shape and has the first guide groove 11 and the second guide groove 12 on the outer side, the second member 20 can move with specific directionality by moving along the first guide groove 11 and the second guide groove 12, so the ball joint unit, unlike ball joints, and can move in two directions unlike common hinges that can be turned only in one direction.

The above description is only an example and the present disclosure may be changed in various ways by those skilled in the art without departing from the spirit described in the following claims, so the protective range of the present disclosure is not limited to specific embodiments.

## Claims

1. A ball joint unit movable along guide grooves, the ball joint unit comprising:
a first member formed in a spherical shape, having axial lower end fixed to a fixed object, and having a first guide groove and a second guide groove perpendicularly crossing each other along longest circumferences thereof; and
a second member extends downward at four sides to receive the first member therein, having four sides movably disposed on the first guide groove and the second guide groove, and supporting a moving object thereon.

2. A ball joint unit movable along guide grooves, the ball joint unit comprising:
a first member formed in a spherical shape, having axial lower end fixed to a fixed object, and having a first guide groove and a second guide groove perpendicularly crossing each other along longest circumferences thereof; and
a second member formed in a hollow cylindrical shape with the lower end open to receive the first member therein, having lower sides movably disposed on the first guide groove and the second guide groove, and supporting a moving object thereon.

3. The ball joint unit of claim 1 or 2, wherein the first member is fixed on a plate-shaped base.

4. The ball joint unit of claim 1 or 2, wherein the first guide groove and the second guide groove cross each other in a central axial direction of the first member.

5. The ball joint unit of claim 1, wherein sliders moving in the first guide groove and the second guide groove are disposed at lower ends of the second member and have recessed shapes corresponding to the spherical shape of the first member to be able to move in close contact with the first member.

6. The ball joint unit of claim 5, wherein the sliders are fixed to ends of rotary shafts rotatably disposed at the lower ends of the second member.

7. The ball joint unit of claim 2, wherein sliders moving in the first guide groove and the second guide groove are disposed at four inner sides of the second member and have recessed shapes corresponding to the spherical shape of the first member to be able to move in close contact with the first member.

8. The ball joint unit of claim 7, wherein the sliders are rotatably disposed at ends of fixed shafts disposed on the inner side of the second member.
